# EUROPEAN PATENT SPECIFICATION

(11) **EP 2 211 287 B1**
(45) Date of publication and mention of the grant of the patent: **14.08.2019**
(21) Application number: 09305038.3
(22) Date of filing: 16.01.2009
(51) Int. Cl.: G06F 21/51

(54) **Method for securing a gadget access to a library**
Verfahren zum Sichern des Zugriffs einer Vorrichtung auf eine Bibliothek
Procédé de fixation d'un accès de gadgets à une bibliothèque

(43) Date of publication of application: 28.07.2010
(73) Proprietor: Alcatel Lucent, 91620 Nozay (FR)
(72) Inventor: Hiribarren, Vincent, 92160 Anthony (FR); Robinson, Julien, 92350, Le Plessis-Robinson (FR)
(74) Representative: Camus, Olivier Jean-Claude

(56) References cited:
- WO-A-2008/060828
- US-A1- 2007 101 146
- US-A1- 2007 101 433
- US-A1- 2008 034 309
- US-A1- 2008 271 127

## Description

The invention relates to a method for securing a gadget access to a library.

The World Wide Web, thereafter referred to as the "Web", is a system of interlinked hypertext pages which can be accessed through the Internet. More precisely, a user can operate a Web browser to display on his/her computer Web pages which are stored in a distant Web server.

For that purpose, the Web browser downloads the code source of such Web pages, via the Internet, from the Web server to the computer.

Such Web pages may contain multimedia data - such as text, images and videos - and/or provide access to applications. Also, Web pages generally allow navigating between them using hyperlinks.

Specific technologies have been developed in order to increase interconnectivity and interactivity in the Web-delivered contents, such technologies being commonly named Web 2.0.

The Web 2.0 allows users not only to retrieve applications and/or information - as the in prior Web - but also to participate in their creation and/or development.

In this context of the Web 2.0, portable software programs called "gadgets" or "widgets" have been developed to provide end users with applications that can be installed and executed within Web pages.

Practically, Web gadgets are files based on eXtensible Markup Language (XML), a general-purpose specification allowing the creation of marked-up languages such as the eXtensible HyperText Markup Language (XHTML).

Gadgets also use XHTML elements, metadata and scripting languages such as JavaScript®, in order to access objects embedded in other applications.

To operate a gadget, a Web browser needs to download the gadget from a specific server, thereafter called gadget container, which stores features to be implemented in an XML file of the gadget, called thereafter primary file.

More precisely, the gadget container requests the transmission of the gadget XML file to a Web hosting server and, after reception, implements the features within such XML or primary file.

Gadgets are created by independent developers but, to provide some compatibility, the features to be implemented therein have been defined and/or standardized de facto. Thereafter, a set of features define to run a gadget is called a library.

Thus, a developer using such features - typically JavaScript® interfaces or API - in the operation of a widget has the assurance that the widget can be implemented through any container complying with these given features.

As an example, a special feature allows to check for the presence of another feature in a container: *gadgets.util.hasFeature(feature name)*

Nevertheless, a problem with gadget development lies on the possibility to develop a gadget in order to spam users. If, for instance, a service provider provides a new standard feature allowing a gadget to send e-mails or launch phone calls, a spam developer can try to create a gadget which would wrongly use that feature to spam users.

A proposed solution for that problem might be to limit access to libraries in order to avoid the operation of a spamming gadget, for instance by limiting its use for a limited number of operations. Nevertheless, this limitation does not allow the development of gadgets to be hosted anywhere, and copied by anyone, according to the gadget development philosophy. It would also restrain gadgets' development even if specific developers are known to be trustworthy and/or even if gadgets' code was deeply checked by the gadget container owner.

Documents US 2007/101146 A1 and US 2007/101433 A1 disclose methods for verifying the origin and integrity of downloaded software, including widgets, and for responding accordingly.

The present invention aims to solve such problem by providing a method which allows both public access to gadget development and enhanced security on gadget operations.

For that purpose, the invention relates to a method for securing the operation of a gadget requiring access to features hosted in a library of a gadget container in order to implement these features into a primary file of such gadget, the primary file being sent by a Web hosting server to the gadget container to allow the implementation of the features with the primary file, wherein:
- the gadget container retrieves the primary file of the gadget from the Web hosting server with a signature, based on a public key /private key encryption system, associated therein,
- the gadget container controls, with a public key of the public/private key encryption system, the signature associated to the gadget primary file,
- the gadget container decides to authorize or to refuse the implementation of its library features depending on whether it accepts or refuses the signature associated with the primary file.

A method according to the invention delivers a light and transparent service agreement for the use of specific features stored in gadget containers while keeping the ease of programming gadgets through open standards.

Thus the invention is fully compatible with gadget's approach since the gadget is not encrypted but rather signed, so that everyone can examine its code to develop it and/or to use it.

In one embodiment, the signature associated to the primary file derives from an encryption, with a private key of the public/private key encryption system, of an identifier depending on the primary file code.

In one embodiment, the identifier depending on the primary file code is a Hash function of the primary file.

In one embodiment the gadget container decides to authorize the access to the features of the library when it both identifies the authorized private key as an authorized private key and establishes the integrity of the primary file.

In one embodiment the gadget container decides to refuse the access to the library features if either:
- the private key is not recognized, or
- the private key is not authorized, or
- the integrity of the primary file is not established.

In this case, a message indicating a lack of authorization may be transmitted to the Web browser requesting to operate the gadget.

In one embodiment the feature is dynamically generated depending on an IP address associated to a request for operating the gadget.

In one embodiment, the authorization for access is given for a certain lack of time.

In one embodiment, the primary file is an XML file and the features comprise Javascript® code.

The invention also relates to a gadget container hosting features to be implemented into a primary file of a gadget, such primary file being received from a Web hosting server upon request by the gadget container, wherein the gadget container comprises:
- Means for retrieving the primary file of the gadget with a signature, based on public/private key encryption system, associated therein,
- Means for controlling, with a public key of the public/private key encryption system, the signature associated to the gadget primary file,
- Means for authorizing or refusing the access to the library's features depending on whether it accepts or refuses the signature associated within the primary file,in order to implement a method according to any of the previous embodiments.

The invention also relates to a gadget primary file requiring access to features hosted in a library of a gadget container in order to implement these features for its operation, wherein it comprises a signature, based on public key/private key encryption system, associated therein in order to implement a method according to any of the previous embodiments.

The foregoing aspects and many of the attendant advantages of this invention will become more readily appreciated as the same becomes better understood by reference to the following detailed description when taking in conjunction with the accompanying drawings wherein:
- Figures 1 and 2 represent the operation of a public/private key system for digital signature as used in the invention, and
- Figure 3 represents a sequence of operations in a method according to the invention.

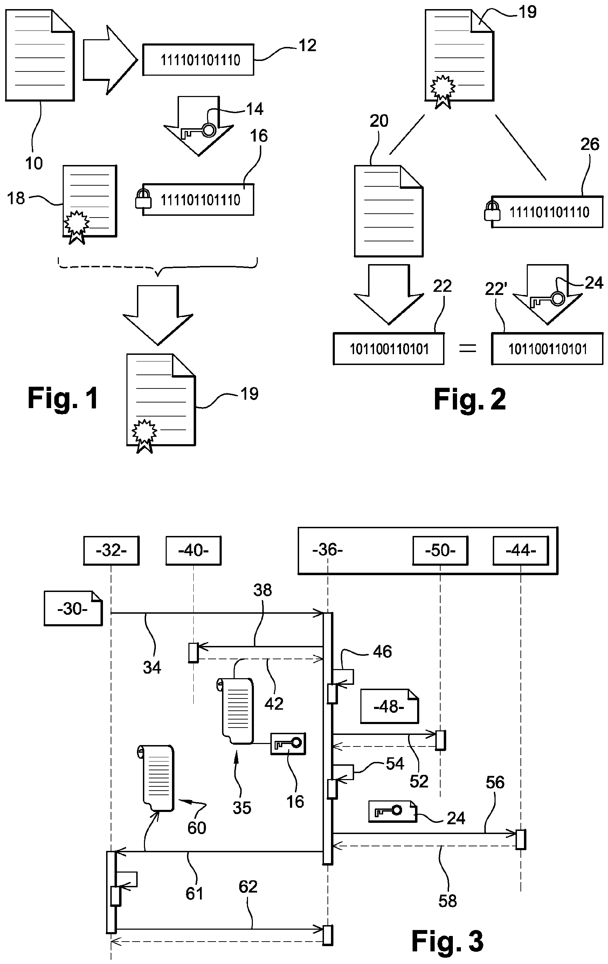

In reference to figures 1 and 2, the essential aspects of a signature through public-key cryptography, also known as asymmetric cryptography, are represented.

In one application of this form of cryptography, any of a plurality of different private keys can be used to encrypt a file while a public key can be used to identify which private key was used to encrypt the file.

For that purpose, public and private keys are codes mathematically related whereby the private key code cannot be practically derived from the public key code while the public key can be used to decrypt private key based encryptions.

Further, private key signature requires a file treatment to get an identifier 12 of this file 10 - for example its Hash function - that a private key 14 encrypts thereafter.

Thereafter, the encrypted signature 16 of the file 10 is obtained by encrypting the identifier 12 with the private key 14. To finish with, a certificate 18 is joined to the encrypted signature 16 and to the file 10 in order to identify a public key 24 which should be used thereafter to verify the signature of the signed file 19.

For that purpose, the signed file 19 (figure 2) is treated in order to retrieve both a file 20 and an encrypted signature 26 so that an identifier 22 - its Hash function according to this example - is derived from this file 20 and so that the public key 24 decrypts the signature 26 to obtain an identifier 22' - its Hash function according to this example.

If identifiers 12, 22 and 22' are identical, it is established that the file 20 corresponds to the file 10 - integrity condition - and that it was signed by a private key 14 which can be identified - identification condition.

Such signature identification process is used in this embodiment of the invention wherein a private key is used to incorporate a signature into a gadget code.

More precisely, a private key is used to encrypt an identifier of such gadget code, as its Hash function, as previously described in reference to figure 1. For instance, such signature may appear under a heading "Signature" in the primary or XML code of a gadget as in the following sequence:

```
 <?xml version="1.0" encoding="UTF-8" ?>
 <Module>
 <ModulePrefs title="Hello world example">
     <Require feature="restrictedLibrary"/>
     <Signature keyld="EtPPe87EdE33Mqs">
     iQCVwUBNI6/9rgiQr+16we9AQExEQP/esoaFA/wLiYrhrfBJqGnMJZRI3WI8jZ/f2fMU3qPfO
     WGkOoyZBujsq1kMEaxai4m+WqaXIemZdsQFaiRxaJTcrE1Sv+8DeaNTQIgMila/Cp/d1ZGj
     YkgbfFdat/Y8iuaIJFiEddMK2L/Mf0hhSo1ozSmxizYY1U
     </Signature>
    </ModulePrefs>
    <Content type="html">
    <![CDATA[ <div id="data"></div>
      <script type="text/javascript">
       restrictedLibrary.action();
      </script>
      ]]>
    </Content>
   </Module>
```

It is underlined that various parameters given in this example - e.g. the name of the XML tag, its emplacement in the XML stream, the kind of signature, the type of gadget specification - do not limit the scope of the invention since they can vary depending on the gadget to be signed.

With a private signature associated to its code, a gadget file can be identified by a gadget container in order to control its access to a hosted features following the sequence of operations explained hereunder in reference to figure 3 where references used in figures 1 and 2 may be used to refer to private/public keys.

To start with a gadget operation, a Web browser 32 requests, upon activation of an HTML iframe tag 30 associated to a gadget, the donwloading of such gadget. For instance, the iframe tag may appear as:

```
 <iframe src="http://shindig.alea.net/gadget?url=http:/ /repository.gadget.com/shadok.xml">
```

Once the iframe 30 leads the Web browser 32 to send a request 34 to a container 36 hosting features for such gadget, the gadget container 36 sends a request 38 to a Web hosting server 40 in order to get an XML file 35 of the gadget, such XML file being also called hereunder primary file.

The Web hosting server 40 sends - step 42 - the primary file 35 to the gadget container 36 in order to have this primary file 35 implemented with retrieved features from the library 44 of the gadget container 36.

According to the invention, the gadget container 36 operates a first control 46 to determine if an authorization 48 is required to access the library 44 for such features.

If this is the case, the gadget container 36 operates a second control 52 through a controller 50 in order to ensure that the gadget XML file comprises a reference to a public key authorized by the gadget container.

If this is also the case, the gadget container 36 operates a third control 54 in order to ensure that the gadget XML file 35 comprises a valid signature 16, i.e. a signature referenced by the gadget container 36. This control is operated as already described in reference to figure 2.

If the public key 24 succeeds in identifying an authorized private key 14 and in recognizing the integrity of the primary file, the gadget container 36 operates a request 56 to its library 44 in order to get the required features of the library in return 58, generally JavaScript implementing code.

Therefore, an active gadget code 60 can be sent - step 61 - to the Web browser 32 in order to have it operating the gadget, namely by processing its JavaScript code.

If the gadget does not reference a correct public key (control 52) or does not comprise an accepted private key or fails to prove integrity (control 54), the gadget container 36 stops the process for getting an authorization to access the library 44 and delivers a message of lack of authorization for that gadget to get access to the library.

It must be underlined that a Markup Language Web based page can be a HTML-base web page but also any kind of XML document and/or a derived application therefrom such as SGML for Standard Generalized Markup Language.

The invention can be carried out in related embodiments falling within the scope of the appended claims. For instance, identification signatures associated to a gadget may be stored and referenced in a database, the gadget code comprising a reference to the database instead of a signature.

According to the embodiments, the feature to be implemented in the primary file of the widget might be dynamically generated depending on an IP address of the Web server and/or a given authorization for access is given for a certain period of time so that a further query 62 for gadget features during this period is automatically accepted without library access control.

## Claims

1. Method for securing the operation of a gadget, wherein:
- said operation of the gadget is requested by a Web browser (32),
- said gadget is specified by a gadget primary file (35),
- said gadget primary file (35) requires access to features hosted in a library (44) of a gadget container (36) in order to implement these features for its operation,
- said gadget container (36) is a server,
and wherein the primary file (35) is sent by a Web hosting server (40) to the gadget container (36) to allow the implementation of the library features required by the primary file (35),
whereupon, the gadget container: (36)
- retrieves the primary file (35) of the gadget from the Web hosting server (40) and an associated signature (16) based on a public key (24)/private key (14) encryption system,
- verifies, with a public key (24) of the public/private key encryption system, the signature (16) associated to the gadget primary file, and
- decides whether to authorize or refuse the implementation of its library (44) features depending on whether the signature (16) associated with the primary file (35) has been successfully verified.

2. Method according to claim 1 wherein the signature associated to the primary file (35) derives from an encryption, with a private key (14) of the public/private key encryption system, of an identifier (12) depending on the primary file (35) code.

3. Method according to claim 2 wherein the identifier (12) depending on the primary file (35) code is a Hash function of the primary file (35).

4. Method according to any of claims 1, 2 or 3 wherein the gadget container (36) decides to authorize the access to the library (44) features when it both identifies the authorized private key (14) as an authorized private key and establishes the integrity of the primary file (35).

5. Method according to any of claims 1, 2 or 3 wherein the gadget container (36) decides to refuse the access to the library features (44) if either:
- the private key (14) is not recognized, or
- the private key (14) is not authorized, or
- the integrity of the primary file (35) is not established.

6. Method according to claim 5 wherein a message indicating a lack of authorization is transmitted to the Web browser (32) requesting to operate the gadget.

7. Method according to any of the previous claims wherein the feature is dynamically generated depending on an IP address associated to a request (34) for operating the gadget.

8. Method according to any of the previous claims wherein the authorization for access is given for a certain period of time.

9. Method according to any of the previous claims wherein the primary file is an XML file and the features comprise Javascript® code.

10. Gadget container (36), being a server, hosting features to be implemented into a primary file (35) of a gadget, a Web browser (32) requesting operation of said gadget, said primary file (35) being received from a Web hosting server (40) upon request by the gadget container (36), wherein the gadget container (36) comprises:
- Means for retrieving the primary file (35) of the gadget from the Web hosting server (40) and an associated signature based on a public/ private key encryption system,
- Means (50) for verifying, with a public key of the public/private key encryption system, the signature associated to the gadget primary file,
- Means for authorizing or refusing the implementation of the library features hosted by the gadget container depending on whether the signature (16) associated with the primary file (35) has been successfully verified,
in order to implement a method according to any of the previous claims.

## Patentansprüche

1. Verfahren zum Sichern des Betriebs einer Apparatur, wobei:
- der genannte Betrieb der Apparatur durch einen Webbrowser (32) angefordert ist,
- die genannte Apparatur durch eine primäre Datei der Apparatur (35) spezifiziert ist,
- die genannte primäre Datei der Apparatur (35) den Zugang zu Merkmalen erfordert, die in einer Bibliothek (44) eines Apparatebehälters (36) gehostet ist, um diese Merkmale für ihren Betrieb zu implementieren,
- der genannte Apparatebehälter (36) ein Server ist,
und wobei die primäre Datei (35) durch einen Web-Hostingserver (40) zu dem Apparatebehälter (36) gesendet ist, um die Implementierung der von der primären Datei (35) angeforderten Bibliotheksmerkmale zuzulassen, woraufhin der Apparaturbehälter (36):
- die primäre Datei (35) der Apparatur (35) vom Web-Hostingserver (40) und eine zugeordnete Signatur (16) basierend auf einem Verschlüsselungssystem mit einem öffentlichen Schlüssel (24) / privaten Schlüssel (14) abruft,
- mit einem öffentlichen Schlüssel (24) des Verschlüsselungssystems mit öffentlichem / privatem Schlüssel die der primären Datei zugeordnete Signatur (16) überprüft, und
- entscheidet, ob die Implementierung die Merkmale ihrer Bibliothek (44) in Abhängigkeit davon, ob die Signatur (16) der primären Datei (35) erfolgreich überprüft ist, zugelassen oder abgelehnt wird.

2. Verfahren gemäß Anspruch 1, wobei die der primären Datei (35) zugeordnete Signatur von einer Verschlüsselung mit einem privaten Schlüssel (14) des öffentlichen / privaten Verschlüsselungssystems einer Kennung (12) in Abhängigkeit von dem Code der primären Datei (35) abgeleitet ist.

3. Verfahren gemäß Anspruch 2, wobei die Kennung (12), die von dem Code der primären Datei (35) abhängt, eine Hash-Funktion der primären Datei (35) ist.

4. Verfahren gemäß irgendeinem der Ansprüche 1, 2, oder 3, wobei der Apparaturbehälter (36) entscheidet, den Zugang zu den Merkmalen der Bibliothek (44) zuzulassen, wenn es sowohl den zugelassenen privaten Schlüssel (14) als einen zugelassenen privaten Schlüssel identifiziert als auch die Integrität der primären Datei (35) herstellt.

5. Verfahren gemäß irgendeinem der Ansprüche 1, 2 oder 3, wobei der Apparaturbehälter (36) entscheidet, den Zugang zu den Merkmalen der Bibliothek (44) abzulehnen, wenn entweder:
- der private Schlüssel (14) nicht erkannt ist oder
- der private Schlüssel (14) nicht zugelassen ist oder
- die Integrität der primären Datei (35) nicht erwiesen ist.

6. Verfahren gemäß Anspruch 5, wobei eine Nachricht, die ein Fehlen der Zulassung angibt, auf den Webbrowser übertragen ist und den Betrieb der Apparatur anfordert.

7. Verfahren gemäß irgendeinem der voranstehenden Ansprüche, wobei das Merkmal in Abhängigkeit von einer IP-Adresse dynamisch erzeugt ist, die einer Anfrage (34) zum Betreiben der Apparatur zugeordnet ist.

8. Verfahren gemäß irgendeinem der voranstehenden Ansprüche, wobei die Zulassung für den Zugang für einen bestimmten Zeitraum erteilt ist.

9. Verfahren gemäß irgendeinem der voranstehenden Ansprüche, wobei die primäre Datei eine XML-Datei ist und die Merkmale einen Javascript®-Code umfassen.

10. Apparaturbehälter (36), der ein Server ist, und Merkmale hostet, die in einer primären Datei (35) einer Apparatur zu implementieren sind, wobei ein Webbrowser (32) den Betrieb der genannten Apparatur anfordert, wobei die genannte primäre Datei (35) von einem Web-Hostingserver (40) bei der Anforderung durch den Apparaturbehälter (36) empfangen ist, wobei der Apparaturbehälter (36) umfasst:
- Mittel zum Abrufen der primären Datei (35) der Apparatur vom Web-Hostingserver (40) und einer zugeordneten Signatur basierend auf einem Verschlüsselungssystem mit öffentlichem / privatem Schlüssel,
- Mittel (50) zum Überprüfen der der primären Datei der Apparatur zugeordneten Signatur mit einem Verschlüsselungssystem mit einem öffentlichen / privaten Schlüssel,
- Mittel zum Zulassen oder Ablehnen der Implementierung der Merkmale der Bibliothek, die in Abhängigkeit davon, ob die der primären Datei (35) zugeordnete Signatur (16) erfolgreich überprüft ist, durch den Apparaturbehälter gehostet ist, um ein Verfahren gemäß irgendeinem der voranstehenden Ansprüche zu implementieren.

## Revendications

1. Procédé pour sécuriser le fonctionnement d'un gadget, dans lequel :
- ledit fonctionnement du gadget est demandé par un navigateur Web (32),
- ledit gadget est spécifié par un fichier primaire de gadget (35),
- ledit fichier primaire de gadget (35) nécessite un accès à des caractéristiques hébergées dans une bibliothèque (44) d'un contenant de gadget (36) afin de mettre en oeuvre ces caractéristiques pour son fonctionnement,
- ledit contenant de gadget (36) est un serveur,
et dans lequel le fichier primaire (35) est envoyé par un serveur d'hébergement Web (40) au contenant de gadget (36) pour permettre la mise en oeuvre des caractéristiques de bibliothèque nécessitées par le fichier primaire (35),
sur quoi, le contenant de gadget (36) :
- extrait le fichier primaire (35) du gadget du serveur d'hébergement Web (40) et une signature associée (16) sur la base d'un système de chiffrement à clé publique (24)/clé privée (14),
- vérifie, avec une clé publique (24) du système de chiffrement à clé publique/privée, la signature (16) associée au fichier primaire de gadget, et
- décide d'autoriser ou de refuser la mise en oeuvre de ses caractéristiques de bibliothèque (44) selon que la signature (16) associée au fichier primaire (35) a été vérifiée avec succès.

2. Procédé selon la revendication 1 dans lequel la signature associée au fichier primaire (35) dérive d'un chiffrement, à l'aide d'une clé privée (14) du système de chiffrement à clé publique/privée, un identifiant (12) dépendant du code de fichier primaire (35).

3. Procédé selon la revendication 2 dans lequel l'identifiant (12) dépendant du code de fichier primaire (35) est une fonction de hachage du fichier primaire (35).

4. Procédé selon l'une quelconque des revendications 1, 2 ou 3 dans lequel le contenant de gadget (36) décide d'autoriser l'accès aux caractéristiques de bibliothèque (44) quand, à la fois, il identifie la clé privée autorisée (14) en tant que clé privée autorisée et établit l'intégrité du fichier primaire (35).

5. Procédé selon l'une quelconque des revendications 1, 2 ou 3 dans lequel le contenant de gadget (36) décide de refuser l'accès aux caractéristiques de bibliothèque (44) si :
- la clé privée (14) n'est pas reconnue, ou
- la clé privée (14) n'est pas autorisée, ou
- l'intégrité du ficher primaire (35) n'est pas établie.

6. Procédé selon la revendication 5 dans lequel un message indiquant une absence d'autorisation est transmis au navigateur Web (32) demandant à faire fonctionner le gadget.

7. Procédé selon l'une quelconque des revendications précédentes dans lequel la caractéristique est générée dynamiquement en fonction d'une adresse IP associée à une demande (34) pour faire fonctionner le gadget.

8. Procédé selon l'une quelconque des revendications précédentes dans lequel l'autorisation d'accès est donnée pour une certaine période de temps.

9. Procédé selon l'une quelconque des revendications précédentes dans lequel le fichier primaire est un fichier XML et les caractéristiques comprennent du code Javascript®.

10. Contenant de gadget (36), qui est un serveur, hébergeant des caractéristiques à mettre en oeuvre dans un fichier primaire (35) d'un gadget, un navigateur Web (32) demandant le fonctionnement dudit gadget, ledit fichier primaire (35) étant reçu depuis un serveur d'hébergement Web (40) sur demande du contenant de gadget (36), dans lequel le contenant de gadget (36) comprend :
- des moyens pour extraire le fichier primaire (35) du gadget du serveur d'hébergement Web (40) et une signature associée basée sur un système de chiffrement à clé publique/privée,
- des moyens (50) pour vérifier, avec une clé publique du système de chiffrement à clé publique/privée, la signature associée au fichier primaire de gadget,
- des moyens pour autoriser ou refuser la mise en oeuvre des caractéristiques de bibliothèque hébergées par le contenant de gadget selon que la signature (16) associée au fichier primaire (35) a été vérifiée avec succès,
afin de mettre en oeuvre un procédé selon l'une quelconque des revendications précédentes.
